# EUROPÄISCHE PATENTSCHRIFT

(11) **EP 3 620 681 B1**
(45) Veröffentlichungstag und Bekanntmachung des Hinweises auf die Patenterteilung: **14.04.2021**
(21) Anmeldenummer: 19188228.1
(22) Anmeldetag: 25.07.2019
(51) Int. Cl.: F16F 9/04, F16F 9/05, F16F 9/32

(54) **LUFTFEDERANORDNUNG FÜR FAHRZEUGE**
PNEUMATIC SPRING ASSEMBLY FOR VEHICLES
DISPOSITIF DE RESSORT À AIR POUR VÉHICULES

(30) Priorität: 30.08.2018 DE 102018214713
(43) Veröffentlichungstag der Anmeldung: 11.03.2020
(73) Patentinhaber: ContiTech Luftfedersysteme GmbH, 30165 Hannover (DE)
(72) Erfinder: Kranz, Harald, 30165 Hannover (DE)
(74) Vertreter: Continental Corporation

(56) Entgegenhaltungen:
- EP-A1- 0 828 087
- WO-A1-2004/109150
- US-A1- 2013 001 840
- US-B2- 8 286 473

## Beschreibung

Die Erfindung betrifft eine Luftfederanordnung mit einem Balg, welcher aus einem elastomeren Material und darin angeordneten Festigkeitsträgern hergestellt ist, welcher einen torusähnlichen Mittelabschnitt sowie daran anschließend ein oberes Balgende und ein unteres Balgende aufweist, und bei dem am oberen Balgende ein ringförmiger Klemmwulst sowie am unteren Balgende ein ringförmiger Abstützwulst ausgebildet ist, wobei in dem elastomeren Material des Balgs wenigstens ein signaltechnischer Leiter angeordnet ist, der unterbrechungsfrei vom Klemmwulst bis zum Abstützwulst verläuft, wobei die beiden Enden des signaltechnischen Leiters mit einer Diagnoseeinrichtung signaltechnisch verbunden sind, und wobei die Diagnoseeinrichtung zur Erzeugung eines Warnhinweises ausgebildet ist, wenn diese aufgrund einer Verringerung oder Unterbrechung der Signalleitfähigkeit des signaltechnischen Leiters dessen kurz bevorstehende oder erfolgte Zerstörung feststellt.

Ähnliche Luftfedern und deren Bälge sind aus der Patentliteratur bekannt. So weist die aus der DE 44 13 559 A1 bekannte Luftfeder einen beidseitig an Befestigungselementen eingespannten Balg aus einem elastomeren Werkstoff auf, in dem in mindestens einer Gewebelage Cordfäden eingebettet sind. Die Wand des Balgs weist ferner mindestens einen elektrischen Leiter auf, dessen Enden aus dem Balg zu elektrischen Anschlüssen geführt sind. Um für eine Wegsensierung für eine Niveauregulierung von Luftfedern ein starkes und sicheres Wegmesssignal zu erzeugen, verläuft der metallische Leiter parallel zur Fadenrichtung der Gewebelage langgestreckt und in Balglängsrichtung von einem Balgende zum anderen. Hierdurch sei ein berührungsloser, induktiv arbeitender Sensor geschaffen, mittels dem die Niveauhöhe einer Rollbalgluftfeder auf indirekte Weise messbar ist.

Aus der DE 39 39 765 A1 ist ebenfalls eine Höhensensorik für die Niveauregulierung von Luftfederbälgen bekannt, welche in die Wand eines Luftfederbalgs spulenförmig eingearbeitete, elektrisch leitfähige Leiterbahnen aufweist. Die Lage und Anordnung der Leiterbahnen soll bei einer Einfederung des Balgs eine Änderung der Induktivität bewirken. Diese Induktivität soll elektronisch ausgewertet und zur Einstellung des Fahrzeugniveaus genutzt werden.

Die DE 10 2015 208 868 A1 zeigt und beschreibt eine Luftfeder mit einem Balg aus einem elastomeren Material, bei der in oder am Balg eine die Verformung des Balgs nach Art von Dehnungsmessstreifen erfassende Sensoreinheit angeordnet ist. Dadurch, dass sich die Sensoreinheit direkt an der Stelle der Verformung des Balges befindet, sei eine besonders genaue Erfassung der Verformung des Balges möglich. Hierdurch lässt sich ein bevorstehendes Bersten des Balges zuverlässig erkennen, jedoch ist der Aufbau der erwähnten Sensoreinheit vergleichsweise aufwendig.

Die WO 2004109150 A1 offenbart eine Luftfeder mit einer Nieveaumesseinrichtung, bei der einzelne Filamente des Festigkeitsträgergewebes leitfähig ausgebildet und zu Messanordnungen zusammengeschaltet sind. Die WO 2004109150 A1 offenbart die Präambel des Anspruchs 1.

Der Erfindung lag daher die Aufgabe zugrunde, eine Luftfederanordnung vorzustellen, die einen einfacher aufgebauten Sensor zum Feststellen einer beginnenden Materialschwäche oder zum Sensieren der Zerstörung ihres Balgs aufweist. Zudem soll es mit dieser Luftfederanordnung möglich sein, Sensorsignale aus dem unteren, fahrwerkseitigen Bereich an den oberen, karosserieseitigen Bereich der Luftfeder weiterzuleiten.

Diese Aufgabe wurde mit einer Luftfeder erreicht, welche die Merkmale des Anspruchs 1 aufweist. Vorteilhafte Weiterbildungen sind in den abhängigen Ansprüchen definiert. Demnach betrifft die Erfindung eine Luftfederanordnung mit einem Balg, welcher aus einem elastomeren Material und darin angeordneten Festigkeitsträgern hergestellt ist, welcher einen torusähnlichen Mittelabschnitt sowie daran anschließend ein oberes Balgende und ein unteres Balgende aufweist, und bei dem am oberen Balgende ein ringförmiger Klemmwulst sowie am unteren Balgende ein ringförmiger Abstützwulst ausgebildet ist, wobei in dem elastomeren Material des Balgs wenigstens ein signaltechnischer Leiter angeordnet ist, der unterbrechungsfrei vom Klemmwulst bis zum Abstützwulst verläuft, wobei die beiden Enden des signaltechnischen Leiters mit einer Diagnoseeinrichtung signaltechnisch verbunden sind, und wobei die Diagnoseeinrichtung zur Erzeugung eines Warnhinweises ausgebildet ist, wenn diese aufgrund einer Verringerung oder Unterbrechung der Signalleitfähigkeit des signaltechnischen Leiters dessen kurz bevorstehende oder erfolgte Zerstörung feststellt.

Zur Lösung der gestellten Aufgabe ist bei dieser Luftfederanordnung vorgesehen, dass wenigstens einer der fadenförmigen Festigkeitsträger im Balg als der mit der Diagnoseeinrichtung verbundene signaltechnische Leiter genutzt wird und dass der als signaltechnischer Leiter dienende Festigkeitsträger an seinem von der Diagnoseeinrichtung fernen Ende signaltechnisch mit einem gesonderten Sensor verbunden ist

Der Erfindung lag die Erkenntnis zugrunde, dass der Einbau von gesonderten signaltechnischen Leitern zur Sensierung einer Materialschwäche oder eines mechanischen Versagens des Balgs der Luftfeder nicht notwendig ist, wenn zumindest einer der Festigkeitsträger im Balg für die erwähnte Messaufgabe genutzt wird. Jeder der fadenförmigen Festigkeitsträger weist eine mehr oder minder große elektrische oder optische Leitfähigkeit auf, so dass diese als ein Maß für deren mechanische Integrität nutzbar ist.

Unter dem Begriff "signaltechnischer Leiter" kann sowohl ein elektrischer Leiter, wie zum Beispiel ein dünner Kupferdraht, aber auch ein optischer Leiter, wie etwa eine Glasfaser, verstanden werden.

So kann vorgesehen sein, dass der als signaltechnischer Leiter dienende Festigkeitsträger im einfachsten Fall aus dem gleichen Material besteht wie die übrigen Festigkeitsträger. Es kann aber auch vorgesehen sein, dass der als signaltechnischer Leiter dienende Festigkeitsträger aus einem anderen Material besteht wie die übrigen Festigkeitsträger. Hierbei kann bevorzugt vorgesehen sein, dass der als signaltechnischer Leiter dienende Festigkeitsträger aus einem Metall besteht, welches elektrischen Strom sehr gut leitet, und dass die übrigen Festigkeitsträger aus einem nichtmetallischen Material mit schlechterer signaltechnischer Leitfähigkeit bestehen. So kann der metallische Festigkeitsträger beispielsweise aus Kupfer bestehen, während die übrigen Festigkeitsträger beispielsweise textile Fasern sind.

Vorzugsweise sind der wenigstens eine als signaltechnischer Leiter dienende Festigkeitsträger und die übrigen Festigkeitsträger zu einem Gewebe miteinander verbunden. Hierdurch lässt sich die Herstellung des Balgs weiter vereinfachen, weil der zumindest eine Sensorfaden zugleich mit den übrigen fadenförmigen und zu einem Gewebe miteinander verbundenen Festigkeitsträgern auf eine noch unvulkanisierte Gummischicht des Balgs auflegbar und anschließend mit einer weiteren Gummischicht überdeckbar ist.

Weiter kann vorgesehen sein, dass der als signaltechnischer Leiter fungierende Festigkeitsträger an seinem von der Diagnoseeinrichtung fernen Ende signaltechnisch mit einem gesonderten Sensor verbunden ist. Demnach dient der zumindest eine als signaltechnischer Leiter fungierende Festigkeitsträger nicht nur dazu, die mechanische Integrität des Balgs zu überwachen, sondern zugleich auch dazu, Sensorsignale eines anderen Sensors zu der erwähnten Diagnoseeinrichtung weiterzuleiten. Der gesonderte Sensor ist beispielsweise ein solcher, mit dem radseitige Zustandsgrößen eines Fahrzeugs messbar sind, wie den Abstand einer Felge eines Fahrzeugfahrwerks von der Fahrbahn.

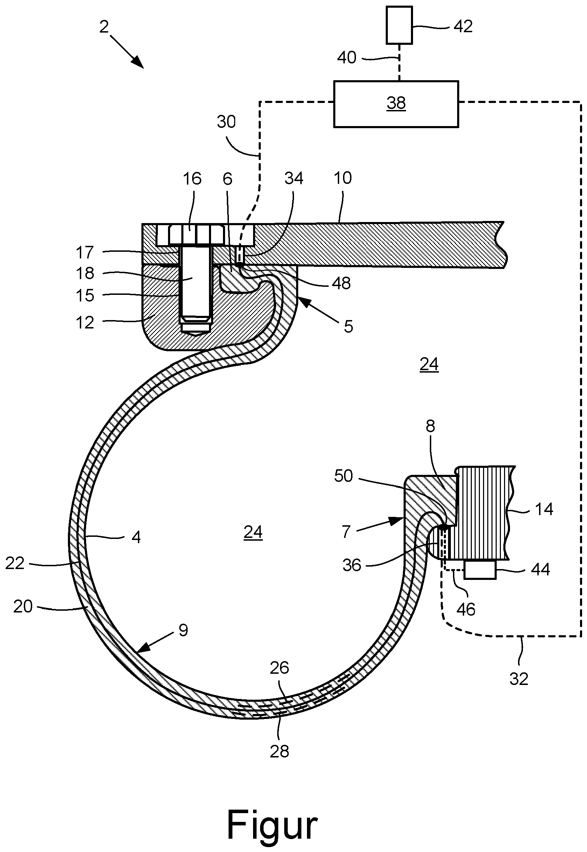

Die Erfindung wird nachfolgend anhand eines Ausführungsbeispiels weiter erläutert, welches in der beigefügten Zeichnung dargestellt ist. Deren einzige Figur 1 zeigt schematisch einen Querschnitt durch einen Balg 4 einer Luftfederanordnung 2, der im Wesentlichen aus einem gummielastischem Material 20 und darin eingebetteten Festigkeitsträgern 26, 28 besteht. Der Balg 4 weist einen torusähnlichen mittleren Abschnitt 9 auf, an dem ein oberes Balgende 5 und ein unteres Balgende 7 anschließen. Am oberen Balgende 5 ist ein ringförmiger Klemmwulst 6 ausgebildet. Am unteren Balgende 7 weist der Balg 4 einen ringförmigen Abstützwulst 8 auf, der sich an einer Felge 14 abstützt, welche ein Bestandteil eines Fahrwerks eines Fahrzeugs ist.

Das obere Balgende 5 liegt mit einem planen Abschnitt seines Klemmwulstes 6 an einer Befestigungsplatte 10 an, die beispielsweise ein Bestandteil einer Fahrzeugkarosserie sein kann, welche über den Balg 4 an der Felge 14 abgefedert ist. An der Befestigungsplatte 10 ist ein Klemmring 12 mittels zumindest zwei Schrauben 16 festgeschraubt. Hierzu weist die Befestigungsplatte 10 eine Bohrung 17 auf, durch die der Schaft 18 der Schraube 16 hindurchgeführt ist. Der Klemmring 12 weist eine Gewindebohrung 15 auf, in welche ein Gewindeabschnitt des Schaftes 18 der Schraube 16 eingeschraubt ist. Der Klemmring 12 weist radial innen einen Aufnahmeabschnitt auf, der geometrisch weitendend kongruent zu der unteren Geometrie des dort angeordneten Klemmwulstes 6 des oberen Balgendes 5 ausgebildet ist. Durch das Festschrauben der Schraube 16 in dem Klemmring 12 wird der Klemmwulst 6 von dem Klemmring 12 so fest gegen die Unterseite der Befestigungsplatte 10 gedrückt, dass der Balg 4 an der Befestigungsplatte 10 befestigt ist und der mit Luft gefüllte Innenraum 24 des Balgs 4 fest sowie druckdicht gegen die Umgebung abgedichtet ist.

Von besonderer Bedeutung bei dieser Luftfederanordnung 2 ist, dass in dem elastomeren Material 20 des Balgs 4 wenigstens ein signaltechnischer Leiter 22 angeordnet ist, der unterbrechungsfrei vom Klemmwulst 6 bis zum Abstützwulst 8 verläuft. Gemäß der Erfindung wird als signaltechnischer Leiter 22 wenigstens einer der fadenförmigen Festigkeitsträger im Balg 4 genutzt, dessen signaltechnische Leitfähigkeit oder elektrischer beziehungsweise optischer Widerstand als ein Maß für die mechanische Integrität desselben und auch des Balgs 4 als Ganzes dient.

Erkennbar ist das obere Ende des signaltechnischen Leiters 22 zu einer oberen Kontaktstelle 48 an der Befestigungsplatte 10 geführt, während das untere Ende des signaltechnischen Leiters 22 an einer unteren Kontaktstelle 50 an der Felge 14 der Luftfederanordnung 2 angeschlossen ist. Zur oberen Kontaktstelle 48 ist durch eine obere Leitungsdurchführung 34 in der Befestigungsplatte 10 eine erste Signalleitung 30 geführt, während eine zweite Signalleitung 32 durch eine untere Leitungsdurchführung 36 zu der unteren Kontaktstelle 50 in der Felge 14 geführt ist.

Die beiden Signalleitungen 30, 32 sind mit einer Diagnoseeinrichtung 38 signaltechnisch verbunden, welche zur Erzeugung eines Warnhinweises ausgebildet ist. Der Warnhinweis wird erzeugt, sobald die Diagnoseeinrichtung 38 aufgrund einer Verringerung oder Unterbrechung der elektrischen oder optischen Leitfähigkeit des signaltechnischen Leiters 22 dessen kurz bevorstehende oder erfolgte Zerstörung feststellt. Dabei kann der Warnhinweis von der Diagnoseeinrichtung 30 als ein Steuersignal erzeugt werden, welches über eine dritte Signalleitung 40 an eine Signaleinrichtung 42 weitergeleitet wird. Diese Signaleinrichtung 42 kann dann ein optisches und/oder akustisches Warnsignal ausgegeben. Es kann aber auch vorgesehen sein, dass der Warnhinweis in einem elektronischen Diagnosespeicher der Diagnoseeinrichtung 38 abgespeichert wird.

Zusätzlich zur Berstschutzüberwachung des Balgs 4 kann der wenigstens eine als signaltechnischer Leiter 22 genutzte fadenförmigen Festigkeitsträger 22 die Aufgabe übernehmen, Messsignale eines gesonderten Sensors 44 an die Diagnoseeinrichtung 38 weiterzuleiten. Dieser gesonderte Sensor 44 ist erkennbar an der fahrwerksseitigen Felge 14 angeordnet, so dass dieser beispielsweise den Abstand der Felge 14 von der Fahrbahn messen kann.

### Bezugszeichenliste

- 2: Luftfeder
- 4: Balg
- 5: Oberes Balgende
- 6: Klemmwulst des Balgs
- 7: Unteres Balgende
- 8: Abstützwulst des Balgs
- 9: Torusähnlicher Abschnitt des Balgs
- 10: Befestigungsplatte
- 12: Klemmring
- 14: Felge
- 15: Gewinde in dem Klemmring
- 16: Schraube
- 17: Bohrung in der oberen Befestigungsplatte
- 18: Schaft der Schraube
- 20: Gummielastisches Material, Gummi
- 22: Signaltechnischer, elektrischer oder optischer Leiter, Festigkeitsträger
- 24: Innenraum der Luftfeder
- 26: Erster Festigkeitsträger
- 28: Zweiter Festigkeitsträger
- 30: Erste Signalleitung
- 32: Zweite Signalleitung
- 34: Erste Leitungsdurchführung
- 36: Zweite Leitungsdurchführung
- 38: Diagnoseeinrichtung
- 40: Dritte Signalleitung
- 42: Signaleinrichtung
- 44: Gesonderter Sensor
- 46: Vierte Sensorleitung
- 48: Obere Kontaktstelle
- 50: Untere Kontaktstelle

## Patentansprüche

1. Luftfederanordnung (2) mit einem Balg (4), welcher aus einem elastomeren Material (20) und darin angeordneten Festigkeitsträgern (26, 28) hergestellt ist, welcher einen torusähnlichen Mittelabschnitt (9) sowie daran anschließend ein oberes Balgende (5) und ein unteres Balgende (7) aufweist, und bei dem am oberen Balgende (5) ein ringförmiger Klemmwulst (6) sowie am unteren Balgende (7) ein ringförmiger Abstützwulst (8) ausgebildet ist, wobei in dem elastomeren Material (20) des Balgs (4) wenigstens ein signaltechnischer Leiter (22) angeordnet ist, der unterbrechungsfrei vom Klemmwulst (6) bis zum Abstützwulst (8) verläuft, wobei die beiden Enden des signaltechnischen Leiters (22) mit einer Diagnoseeinrichtung (30) signaltechnisch verbunden sind, und wobei die Diagnoseeinrichtung (30) zur Erzeugung eines Warnhinweises ausgebildet ist, wenn diese aufgrund einer Verringerung oder Unterbrechung der Signalleitfähigkeit des signaltechnischen Leiters (22) dessen kurz bevorstehende oder erfolgte Zerstörung feststellt, wobei wenigstens einer der fadenförmigen Festigkeitsträger im Balg (4) als der mit der Diagnoseeinrichtung (30) verbundene signaltechnische Leiter (22) genutzt wird, **dadurch gekennzeichnet, dass** der als signaltechnischer Leiter (22) dienende Festigkeitsträger an seinem von der Diagnoseeinrichtung (30) fernen Ende signaltechnisch mit einem gesonderten Sensor (44) verbunden ist.

2. Luftfederanordnung nach Anspruch 1, **dadurch gekennzeichnet, dass** der als signaltechnischer Leiter (22) dienende Festigkeitsträger aus dem gleichen Material besteht wie die übrigen Festigkeitsträger (26, 28).

3. Luftfederanordnung nach Anspruch 1, **dadurch gekennzeichnet, dass** der als signaltechnischer Leiter (22) dienende Festigkeitsträger aus einem anderen Material besteht als die übrigen Festigkeitsträger (26, 28), wobei dieser signaltechnischer Leiter (22) aus einem Metall und die übrigen Festigkeitsträger (26, 28) aus einem nichtmetallischen Material bestehen.

4. Luftfederanordnung nach einem der vorherigen Ansprüche, **dadurch gekennzeichnet, dass** der als signaltechnischer Leiter (22) dienende Festigkeitsträger und die übrigen Festigkeitsträger (26, 28) zu einem Gewebe miteinander verbunden sind.

5. Luftfederanordnung nach Anspruch 1, **dadurch gekennzeichnet, dass** der Sensor (44) zur Messung von radseitigen Zustandsgrößen eines Fahrzeugs ausgebildet und angeordnet ist.

## Claims

1. Air spring assembly (2), with a bellow (4), which is produced from an elastomeric material (20) and reinforcing elements (26, 28) arranged therein and has a torus-like middle portion (9) and, adjoining thereto, an upper bellow end (5) and a lower bellow end (7), and in the case of which an annular clamping bead (6) is formed at the upper bellow end (5) and an annular supporting bead (8) is formed at the lower bellow end (7), wherein at least one signalling conductor (22) that runs uninterruptedly from the clamping bead (6) to the supporting bead (8) is arranged in the elastomeric material (20) of the bellow (4), wherein the two ends of the signalling conductor (22) are connected in a signalling manner to a diagnostic device (30), and wherein the diagnostic device (30) is designed for generating a warning message when it establishes on the basis of a reduction or interruption of the signal conductivity of the signalling conductor (22) that its destruction is imminent or has already occurred, wherein at least one of the filamentary reinforcing elements in the bellow (4) is used as the signalling conductor (22) connected to the diagnostic device (30), **characterized in that** the reinforcing element serving as a signalling conductor (22) is connected at its end remote from the diagnostic device (30) in a signalling manner to a separate sensor (44).

2. Air spring assembly according to Claim 1, **characterized in that** the reinforcing element serving as a signalling conductor (22) consists of the same material as the other reinforcing elements (26, 28).

3. Air spring assembly according to Claim 1, **characterized in that** the reinforcing element serving as a signalling conductor (22) consists of a different material than the other reinforcing elements (26, 28), wherein this signalling conductor (22) consists of a metal and the other reinforcing elements (26, 28) consist of a non-metallic material.

4. Air spring assembly according to one of the preceding claims, **characterized in that** the reinforcing element serving as a signalling conductor (22) and the other reinforcing elements (26, 28) are connected to one another to form a woven fabric.

5. Air spring assembly according to Claim 1, **characterized in that** the sensor (44) is designed and arranged for measuring state variables at the wheel of a vehicle.

## Revendications

1. Ensemble formant amortisseur pneumatique (2) comprenant un soufflet (4) qui est fabriqué à partir d'un matériau élastomère (20) et de renforts (26, 28) disposés à l'intérieur, qui comporte une portion centrale toroïdale (9) suivie d'une extrémité de soufflet supérieure (5) et d'une extrémité de soufflet inférieure (7), et dans lequel un bourrelet de serrage annulaire (6) est formé à l'extrémité de soufflet supérieure (5) et un bourrelet de support annulaire (8) est formé à l'extrémité de soufflet inférieure (7), au moins un conducteur de signal (22) étant disposé dans le matériau élastomère (20) du soufflet (4) et s'étendant sans interruption du bourrelet de serrage (6) au bourrelet de support (8), les deux extrémités du conducteur de signal (22) étant reliées par une liaison de signal à un dispositif de diagnostic (30), et le dispositif de diagnostic (30) étant conçu pour générer un avertissement s'il détecte que le conducteur de signal (22) est sur le point d'être détérioré ou a été détérioré en raison d'une réduction ou d'une interruption de sa conductivité de signal, au moins un des renforts en forme de fil dans le soufflet (4) étant utilisé comme conducteur de signal (22) relié au dispositif de diagnostic (30), **caractérisé en ce que** le renfort servant de conducteur de signal (22) est relié, à son extrémité distante du dispositif de diagnostic (30), par une liaison de signal à un capteur séparé (44) .

2. Ensemble formant amortisseur pneumatique selon la revendication 1, **caractérisé en ce que** le renfort servant de conducteur de signal (22) est en le même matériau que les autres renforts (26, 28).

3. Ensemble formant amortisseur selon la revendication 1, **caractérisé en ce que** le renfort servant de conducteur de signal (22) est en un matériau différent des autres renforts (26, 28), ce conducteur de signal (22) étant en métal et les renforts restants (26, 28) étant en matériau non métallique.

4. Ensemble formant amortisseur selon l'une des revendications précédentes, **caractérisé en ce que** le renfort servant de conducteur de signal (22) et les renforts restants (26, 28) sont reliés les uns aux autres pour former un tissu.

5. Ensemble formant amortisseur selon la revendication 1, **caractérisé en ce que** le capteur (44) est conçu et disposé pour mesurer des grandeurs d'état côté roue d'un véhicule.
